Europäisches Patentamt

European Patent Office

Office européen des brevets

(11) Numéro de publication : **0 517 621 A1**

# (12) DEMANDE DE BREVET EUROPEEN

(21) Numéro de dépôt : **92420170.0**

(22) Date de dépôt : **25.05.92**

(51) Int. Cl.$^5$ : **H02J 13/00**

(30) Priorité : **03.06.91 FR 9106982**

(43) Date de publication de la demande :
**09.12.92 Bulletin 92/50**

(84) Etats contractants désignés :
**BE DE ES GB IT SE**

(71) Demandeur : **MERLIN GERIN**
**2, chemin des Sources**
**F-38240 Meylan (FR)**

(72) Inventeur : **Verdier, Jean-Marc**
**MERLIN GERIN - Sce. Propriété Industrielle**
**F-38050 Grenoble Cedex 9 (FR)**
Inventeur : **Perez, André**
**MERLIN GERIN - Sce. Propriété Industrielle**
**F-38050 Grenoble Cedex 9 (FR)**
Inventeur : **Teyssandier, Christian**
**MERLIN GERIN - Sce. Propriété Industrielle**
**F-38050 Grenoble Cedex 9 (FR)**

(74) Mandataire : **Kern, Paul et al**
**Merlin Gerin Sce. Propiété Industrielle**
**F-38050 Grenoble Cédex 9 (FR)**

(54) **Dispositif de télétransmission à courants porteurs en ligne destiné au contrôle commande d'un réseau électrique, notamment à moyenne tension.**

(57)    L'invention est relative à un dispositif de télétransmission (10) pour l'automatisation d'un réseau de distribution électrique (MT) comprenant des moyens de communication pilote (14) et esclave (27) à courants porteurs en ligne utilisant par couplage capacitif les lignes du réseau (MT) comme support de transmission pour l'échange d'informations et d'ordres vers une pluralité d'organes d'interruption (I1A,I2A,...I1B,I2B,...I1C,I2C...,D). En fonction du code de priorité des modems (30), du niveau du signal reçu, et de la position ouvert ou fermé de certains organes d'interruption, le dispositif de transmission (10) se découpe automatiquement en plusieurs sous-réseaux disjoints contenant chacun un poste source (PSA,PSB,PSC) auquel est attribuée une zone de communication (ZA,ZB,ZC), dont les frontières en exploitation normale sont formées par des interrupteurs d'artère ouverts. En régime d'exploitation de secours après incident sur le réseau (MT), les modems (30) des moyens de communication (14,27) modifient les frontières des zones de communication (ZA,ZB,ZC) grâce à la configuration du circuit de couplage (45) susceptible de se trouver dans un premier état de by-pass, ou dans un deuxième état de double couplage.

EP 0 517 621 A1

FIG.6

LB

LA

LC

G

PSB

PSA

PSC

14

ZA

ZB

ZC

I1B

I2B

T2B

DEFAUT

27

I1C

I2C

I3C

27

I1A

I2A

I3A

I4A

27

11

L'invention est relative à un dispositif de télétransmission destiné à l'automatisation d'un réseau de distribution électrique, notamment à moyenne tension, comprenant des moyens de communication à courants porteurs en ligne utilisant par couplage capacitif les lignes du réseau comme support de transmission pour l'échange d'informations et d'ordres entre un système informatisé de téléconduite et une pluralité d'organes d'interruption, notamment des interrupteurs télécommandés, et des disjoncteurs répartis le long d'une pluralité de tronçons élémentaires du réseau pour assurer une modification de structure du réseau affecté par un incident, au moyen d'opérations d'ouverture ou de fermeture des organes d'interruption concernés, le réseau étant interconnecté à des postes sources pilotés par le système informatisé de téléconduite au moyen de liaisons spécifiques.

Pour remplacer les transmissions par radio ou par téléphone, un tel système de transmission à courants porteurs en ligne est envisageable pour améliorer l'exploitation des réseaux de distribution à moyenne tension, notamment pour des applications de téléconduite, d'automatisation, d'auscultation, de télérelevé des comptages de la clientèle, de transmission d'ordres et de télémesures. Une modulation utilisée est la modulation d'amplitude à bande latérale unique qui s'étend de 40 à 500kHz.

La modification de structure du réseau de distribution résultant des opérations d'ouverture et de fermeture des disjoncteurs ou interrupteurs suite à des défauts ou des manoeuvres volontaires peut néanmoins perturber la transmission des signaux avec des phénomènes d'affaiblissement de niveau dans certains tronçons du réseau, ce qui va au détriment de la fiabilité du système de télétransmission.

L'objet de l'invention consiste à améliorer le dispositif de télétransmission en autorisant la continuité de la communication de l'ensemble des organes d'interruption suite à un défaut sur une artère.

Le dispositif de télétransmission est caractérisé en ce que:

- le dispositif de transmission est découpé en régime d'exploitation normale en plusieurs sous-réseaux disjoints contenant chacun un poste source, auquel est attribuée une zone de communication, dont les frontières sont formées par des interrupteurs d'artère dans l'état ouvert;
- chaque poste source comporte un moyen de communication pilote ayant un circuit de modulation et de démodulation maître destiné à recevoir et à émettre un signal codé dans une zone de communication prédéterminée;
- chaque interrupteur d'artère est équipé d'un moyen de communication auxiliaire ayant un circuit de modulation et de démodulation esclave destiné à émettre et à recevoir les signaux codés avec un ordre de priorité, grâce à un premier récepteur relié à un coupleur aval connecté à l'une des bornes dudit interrupteur, un deuxième récepteur relié à un coupleur amont relié à la borne opposée du même interrupteur, et un émetteur branché à un circuit de couplage;

- ledit circuit de couplage se trouve soit dans un premier état de shuntage ou by-pass lors de la fermeture de l'interrupteur associé, ou lors d'une réception d'un seul signal codé par le premier ou deuxième récepteur, soit dans un deuxième état de double couplage, lors de l'ouverture de l'interrupteur, et en cas de réception de deux signaux codés, de manière à reconfigurer automatiquement les zones de communication sur une artère en défaut, permettant d'obtenir une communication optimum du dispositif de transmission avant la modification de structure du réseau.

Selon une caractéristique de l'invention, le circuit de couplage de chaque moyen de communication auxiliaire comporte un système de commutation à deux contacts branchés en série respectivement à la sortie de chaque coupleur aval et amont, et à point milieu branché à la sortie de l'émetteur, chaque contact étant actionné par un relais piloté par un circuit électronique du circuit de modulation et de démodulation esclave.

Un détecteur de position envoie au circuit électronique, un signal d'état ouvert ou fermé de l'interrupteur d'artère.

Les deux contacts des relais sont fermés dans le premier état de shuntage du circuit de couplage, alors que dans le deuxième état de double couplage, l'un desdits contacts est fermé et l'autre est ouvert, le contact fermé étant situé du côté du poste source émettant le signal codé le plus prioritaire, ou de niveau supérieur.

Le système informatisé de téléconduite coopère avec un organe de gestion relié au moyen de communication pilote de chaque poste source par les liaisons pour assurer la gestion des priorités entre les applications et le routage des informations vers les moyens de communication pilote des postes sources concernés.

D'autres avantages et caractéristiques ressortiront plus clairement de la description qui va suivre d'un mode de réalisation de l'invention donné à titre d'exemple non limitatif et représenté aux dessins annexés dans lesquels:

La figure 1 montre le schéma synoptique d'un dispositif de télétransmission à courants porteurs en ligne selon l'invention.

Les figures 2 à 4 représentent schématiquement la composition d'un moyen de communication respectivement d'un poste source, d'un disjoncteur à réenclenchement d'une artère de dérivation, et d'un poste de transformation.

La figure 5 est le schéma électrique du moyen de communication auxiliaire d'un interrupteur d'artère.

La figure 6 est une vue du dispositif de télétransmission avec les zones de communication en régime d'exploitation normale avant l'apparition du défaut.

La figure 7 représente le réseau MT de la figure 6 reconfiguré après défaut.

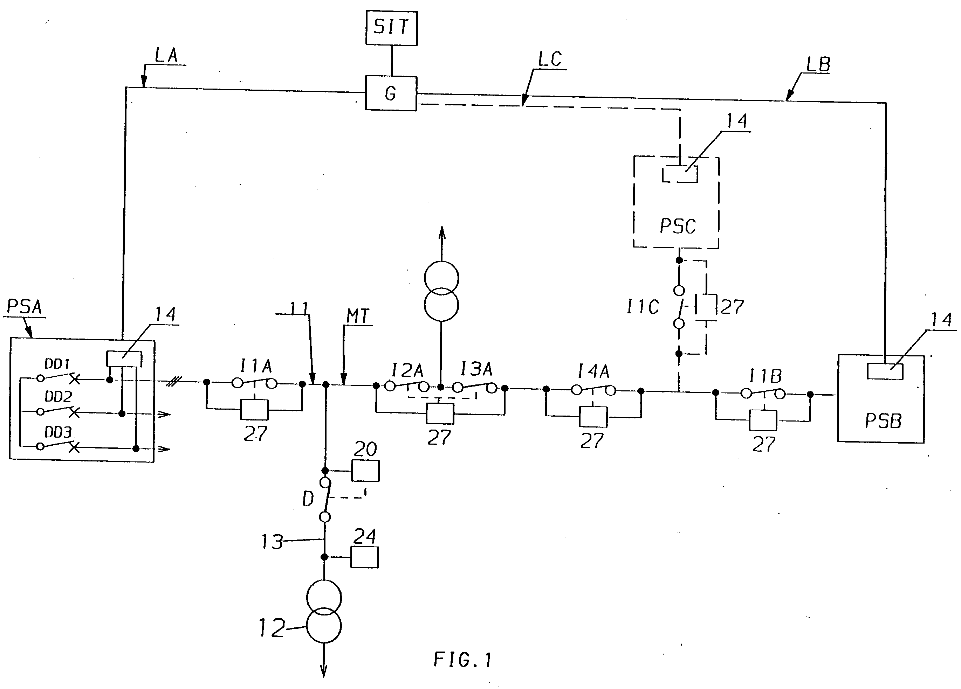

En référence à la figure 1, un dispositif de télétransmission 10 par courants porteurs en ligne est associé à un réseau électrique MT de distribution à moyenne tension (entre 15kV et 33kV), pour réaliser un ensemble d'applications, notamment la téléconduite, l'automatisation et l'auscultation du réseau MT, le télérelevé des comptages de la clientèle, la télémesure, la transmission d'ordres vers la clientèle, etc...Le dispositif de transmission 10 utilise les lignes du réseau MT triphasé comme support de transmission et assure le transport des informations échangées entre un système informatisé de téléconduite SIT, et des organes d'interruption élémentaires répartis sur le réseau MT, de manière à pouvoir restructurer en un temps prédéterminé, l'ensemble du réseau MT affecté par un incident.

En fonction de leur emplacement sur le réseau MT, les organes d'interruption sont formés soit par des interrupteurs télécommandés I1A,I2A,I3A, I4A,...I1B,I1C... répartis le long de l'artère principale 11, soit par des disjoncteurs, dont l'un D est un disjoncteur à réenclenchement d'une artère de dérivation 13 pour l'alimentation d'un poste de transformation 12 moyenne tension/basse tension.

L'artère principale 11 du réseau MT est alimentée par une pluralité de postes sources PSA,PSB,PSC,... constituant des points de regroupement de départs aériens, souterrains ou mixtes, alimentés par des transformateurs haute tension/ moyenne tension. Chaque poste source PSA,PSB,PSC comporte plusieurs disjoncteurs de départ DD1,DD2,DD3, dont l'un DD1 du poste source PSA est connecté à l'artère principale 11. Les autres disjoncteurs de départ des postes sources PSB et PSC ne sont pas représentés.

Le fonctionnement du dispositif de transmission 10 par courants porteurs en ligne ne perturbe pas la distribution d'énergie électrique à 50 Hz du réseau MT. La variabilité de la configuration du réseau MT, c'est à dire du support de transmission du dispositif 10, et les priorités entre les applications imposent la gestion de toutes les communications au niveau d'un organe de gestion G, susceptible d'être piloté par le système informatisé de téléconduite SIT.

L'organe de gestion G effectue d'autre part le routage des communications vers les postes sources PSA,PSB,PSC,... par analyse du contenu des messages des applications reçus par le système SIT. En fonction de l'état ouvert ou fermé des interrupteurs I1A,I2A... de l'artère principale 11, ou de l'apparition d'un défaut sur le réseau MT, l'organe de gestion G participe éventuellement à l'élaboration des zones de communication de chaque poste source PSA, PSB,PSC..., puis envoie des ordres de commande vers les postes sources concernés selon l'adresse du destinataire.

Chaque poste source PSA,PSB,PSC renferme un premier moyen de communication pilote 14 couplé sur le réseau MT en aval des disjoncteurs de départ DD1,DD2,DD3, et relié électriquement avec l'organe de gestion G par une ligne LA,LB,LC spécifique, notamment à transmission par radio, par fils pilotes ou par téléphone.

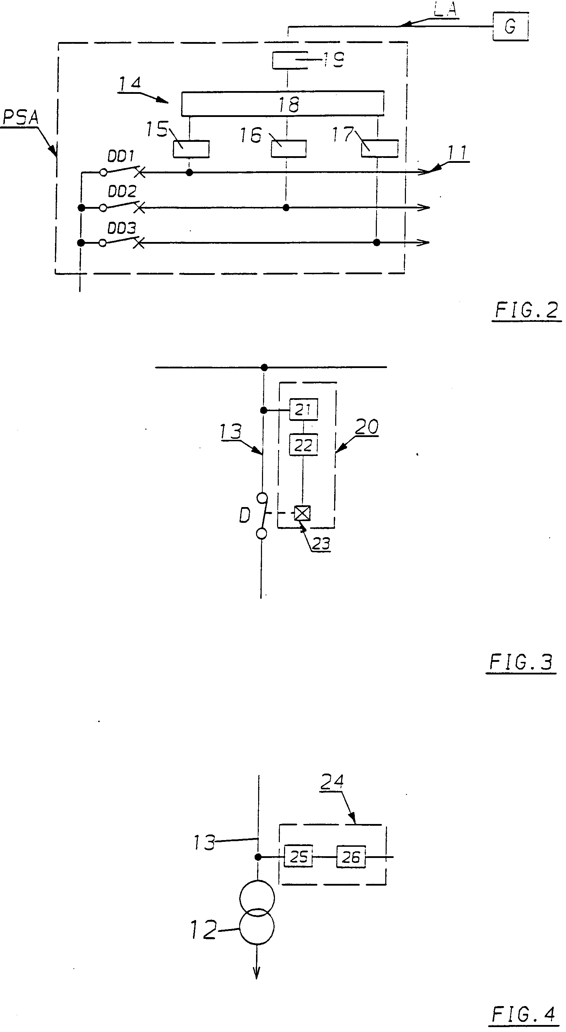

La figure 2 représente la composition d'un moyen de communication pilote 14 du poste source PSA affecté du code A, comprenant un coupleur 15,16,17 par départ, branché en aval du disjoncteur de départ DD1,DD2,DD3 correspondant, pour réaliser le couplage du moyen de communication pilote 14 avec le réseau MT. Un circuit adaptateur 18 commun est interposé entre les différents coupleurs 15,16,17, et un circuit de modulation et de démodulation 19 appelé par la suite "modem". L'accès du modem 19 vers l'organe de gestion G s'effectue par la ligne LA. Le premier moyen de communication pilote 14 est maître dans sa zone de communication, et le modem 19 ne reçoit et n'émet que sur un seul code ajustable.

Le disjoncteur D de l'artère de dérivation 13 comporte un deuxième moyen de communication 20 composé d'un coupleur 21 branché an amont du disjoncteur D, et d'un modem 22 connecté à un organe de commande 23 du disjoncteur D (figure 3).

Sur la figure 4, le poste de transformation 12 moyenne tension/ basse tension disposé en aval du disjoncteur D comporte un troisième moyen de communication 24 composé d'un coupleur 25 branché en amont du poste 12, et d'un modem 26 avec accès soit vers un concentrateur de télérelevé à basse tension,soit vers un compteur d'énergie, soit vers un interface prédéterminé.

Les deuxième et troisième moyens de communication 20,24 à couplage simple peuvent émettre et recevoir sur plusieurs codes présélectionnés.La commutation d'un code sur l'autre s'opère au bout d'un temps prédéterminé.

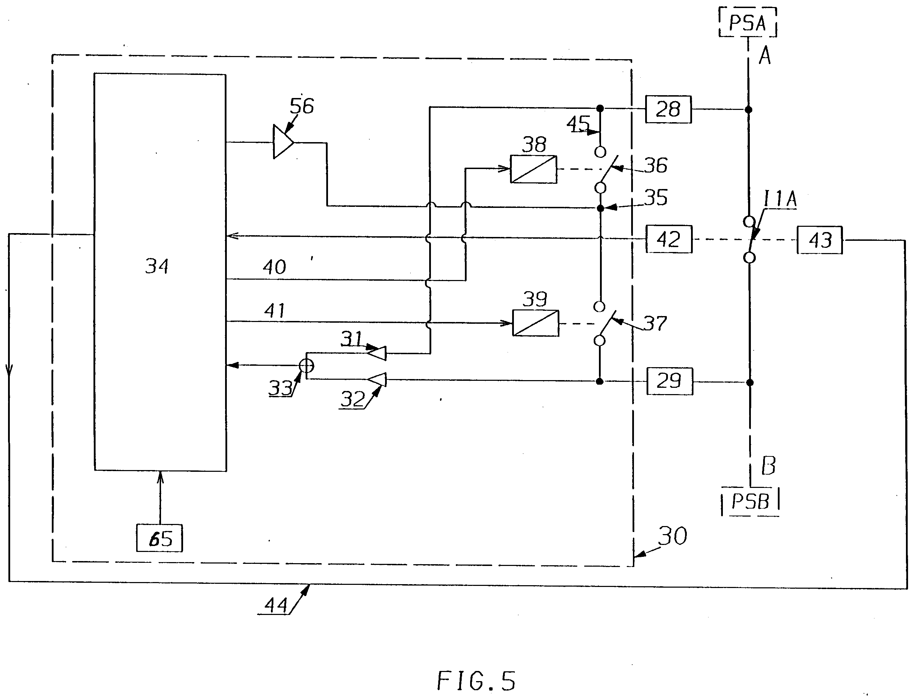

En référence à la figure 5, l'interrupteur I1A de l'artère principale 11 est équipé d'un quatrième moyen de communication 27 auxiliaire comprenant un coupleur aval 28 et un coupleur amont 29 disposés de part et d'autre de l'interrupteur I1A pour réaliser la fonction by-pass dans l'état ouvert de l'interrupteur I1A.

Les deux coupleurs de ligne 28,29 sont connectés électriquement à une carte électronique d'un modem 30 destiné à assurer une modulation adaptée au réseau de transmission, et éventuellement à interpréter des informations de bas niveau pour la gestion des communications. Le coupleur aval 28 est connecté à un premier récepteur 31, et le coupleur amont 29 est connecté à un deuxième récepteur 32.Les sorties des deux récepteurs 31,32 sont reliées à un circuit sommateur 33 ou d'aiguillage, dont le signal de sortie est appliqué à un circuit électronique 34 de modulation/démodulation, associé à un sélecteur 65 de codes. Un émetteur 56 est piloté par le circuit électronique 34, et est relié à un point milieu 35 d'un système de commutation ayant à titre d'exemple deux contacts 36,37 auxiliaires branchés respectivement à la sortie des coupleurs 28,29. Les deux contacts 36,37 sont actionnés par des relais 38,39 commandés à partir du circuit électronique 34 par deux liaisons électriques 40,41. Un détecteur de position 42 envoie au circuit électronique 34 un signal d'état ouvert ou fermé de l'interrupteur I1A d'artère. L'accès vers l'organe de commande 43 de l'interrupteur I1A s'effectue à partir du circuit électronique 34 à travers une liaison électrique 44.

Selon une variante, le circuit sommateur 33 peut être supprimé, et les deux sorties des récepteurs 31,32 sont pilotées directement par le circuit électronique 34.

L'ensemble des coupleurs 15,16,17,21,25,28,29 sont du type capacitif qui laissent passer les signaux codés à haute fréquence du dispositif de transmission 10, et bloquent le signal 50Hz du réseau MT.

Le quatrième moyen de communication 27 de l'interrupteur I1A peut émettre et recevoir des codes présélectionnés avec un ordre de priorité. Pour l'interrupteur I1A de la figure 5, les codes A,B et C sont sélectionnés à titre d'exemple avec les priorités respectives 1,2,3.

Le couplage du quatrième moyen de communication 27 se trouve:

- soit en by-pass lorsque l'interrupteur I1A est fermé, ou lorsque le modem 30 ne reçoit rien ou qu'un seul code, par exemple A ou B;

- soit en double coupleur lorsque l'interrupteur I1A est ouvert, et lorsque le modem 30 reçoit deux codes, par exemple A et B;

Le fonctionnement du quatrième moyen de communication 27 selon la figure 5 est le suivant:

On suppose que le quatrième moyen de communication 27 de l'interrupteur I1A se trouve dans la zone de communication A. Le récepteur 31 reçoit via le coupleur 28, le code A issu du poste source A en priorité 1, et le récepteur 32 reçoit via le coupleur 29 le code B issu du poste source B en priorité 2.

COUPLAGE BY-PASS

En cas d'émission d'un seul code A ou B par le poste source PSA ou PSB, le récepteur 31 ou 32 correspondant reçoit ledit code, et le circuit électronique 34 envoie un signal de fermeture aux deux relais 38,39. Les deux contacts 36,37 du circuit de couplage 45 se ferment de manière à constituer un circuit de shuntage à haute fréquence appelé by-pass, connecté à la sortie respective de chaque coupleur 28,29.

En l'absence de signal d'émission par les postes sources PSA,PSB, les récepteurs 31,32 ne détectent rien, et le circuit électronique 34 coopère avec les relais 38,39 pour le maintien fermé des contacts 36,37.

Dans l'état de fermeture de l'interrupteur I1A, le détecteur de position 42 associé envoie un signal d'état au circuit électronique 34, lequel garde les contacts 36,37 du by-pass fermés.

COUPLAGE DOUBLE

Le couplage double du quatrième moyen de communication 27 intervient dans l'état d'ouverture de l'interrupteur IA1, et lors d'une double réception des codes A et B par les récepteurs 31,32. Deux cas de fonctionnement sont possibles:

- Lorsque le niveau des codes A et B est approximativement le même, le circuit électronique 34 cherche à communiquer avec le code A de priorité 1, en provoquant via les relais 38,39 la fermeture du contact 36 et l'ouverture du contact 37.

- Lorsque le niveau de l'un des codes est nettement différent de l'autre code, par exemple le code B plus fort que le code A, le circuit électronique 34 cherche alors à communiquer avec le code B de niveau supérieur, et provoque l'ouverture du contact 36 par le relais 38 et la fermeture du contact 37 par le relais 39.

Les différents moyens de communication 20,24,27 du réseau MT sont complètement transparents du contenu des données transportées, c'est à dire que la transmission n'est assurée qu'à la demande d'une application, sans aucune modification.

La fonction de l'organe de gestion G consiste à assurer:

- la gestion des priorités entre les applications,

- le routage des informations vers les postes sources PSA,PSB,PSC concernés,

- la gestion des performances (mesure d'erreurs) et des défaillances (supervision),

- et accessoirement, la gestion des temporisations pour le changement des zones de communications du dispositif de transmission 10.

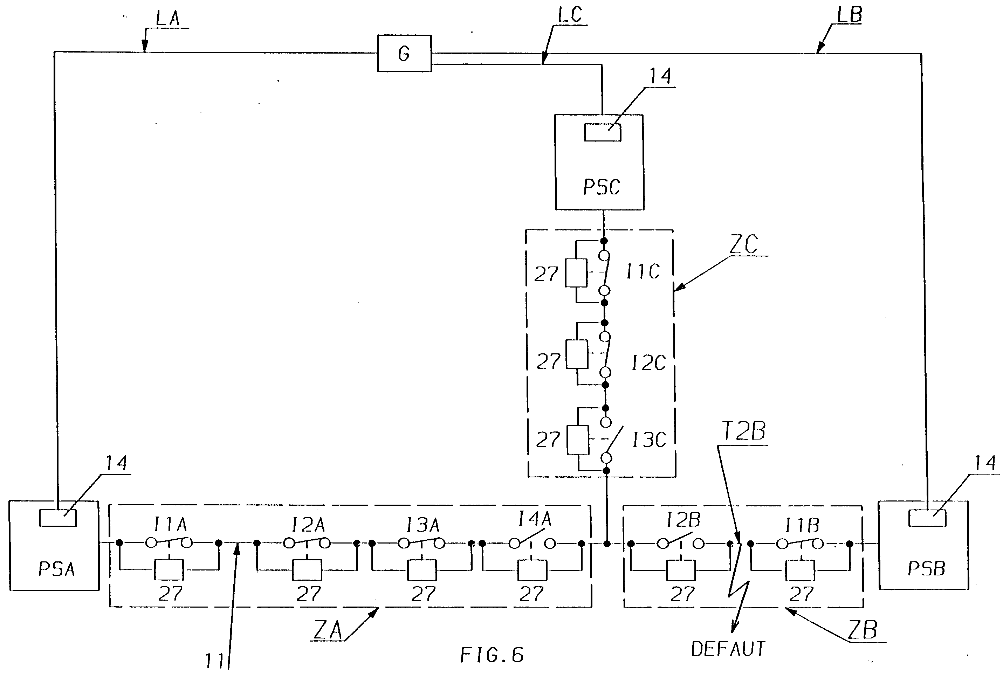

En référence à la figure 6, le dispositif de transmission 10 est découpé en une pluralité de sous-réseaux disjoints ne contenant qu'un seul poste source PSA,PSB,PSC...En régime d'exploitation normale, c'est à dire hors incident sur le réseau MT de distribution, à chaque poste source PSA,PSB,PSC est attribué respectivement, une zone de communication ZA,ZB,ZC contenant le poste source concerné PSA,PSB,PSC, et dont les frontières sont formées par les interrupteurs I4A,et I3C ouverts. Dans la zone ZA, le moyen de communication pilote 14 du poste source PSA est maître, et communique avec les quatrièmes moyens de communication 27 esclaves associés aux interrupteurs I1A,I2A,I3A,I4A.

Dans la zone ZB, le moyen de communication pilote 14 du poste source PSB est maître, et communique avec les quatrièmes moyens de communication 27 esclaves associés aux interrupteurs I1B,I2B.

Il en est de même dans la zone ZC dans laquelle les quatrièmes moyens de communication 27 esclaves des interrupteurs I1C,I2C,I3C communiquent avec le moyen de communication 14 maître du poste PSC.

Sur la figure 6, supposons que:
- les moyens de communication 27 de la zone ZA reçoivent le code A en priorité 1, le code B en priorité 2, et le code C en priorité 3;
- les moyens de communication 27 de la zone ZB reçoivent le code B en priorité 1, le code A en priorité 2, et le code C en priorité 3,
- les moyens de communication 27 de la zone ZC reçoivent le code C en priorité 1, le code B en priorité 2, et le code A en priorité 3.

L'interrupteur I4A est ouvert et se trouve en double couplage par réception des codes A et B. Après fermeture du contact 36 et ouverture du contact 37, le circuit électronique 34 du moyen de communication 27 associé, reçoit et émet vers le moyen de communication pilote 14 du poste source PSA.

L'interrupteur I3C est ouvert et se trouve également en double couplage par réception des codes C et B. Le circuit électronique 34 de son moyen de communication 27 reçoit et émet vers le moyen de communication pilote 14 du poste source PSC.

En cas de défaut sur l'artère principale 11, le dispositif de transmission 10 comprenant les lignes du réseau MT comme support de communication présente l'inconvénient d'interrompre la liaison entre l'émetteur de certains moyens de communication pilote 14 et les récepteurs des quatrièmes moyens de communication 27 situés en aval du défaut.

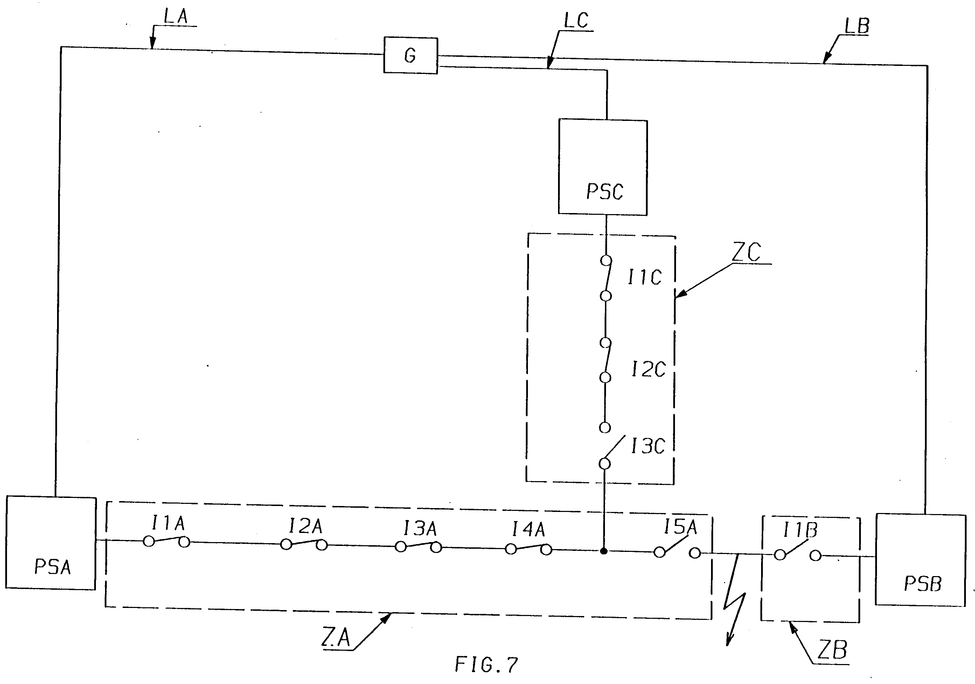

En l'occurrence d'un défaut sur le tronçon T2B de l'artère principale 11, on supposera que la présence de ce défaut autorise la transmission des signaux codés avant celui-ci, mais empêche la transmission au-delà du défaut, c'est à dire que le moyen de communication 27 de l'interrupteur I2B peut recevoir et transmettre vers le poste source PSA ou PSC, mais celui de l'interrupteur I1B ne peut recevoir les signaux codés issus des postes sources PSA et PSC. Il en est de même des moyens de communication 27 de l'interrupteur I2B, et de l'ensemble des interrupteurs des zones ZA et ZC qui ne peuvent recevoir le signal codé B issu du poste source PSB. En particulier, le moyen de communication 27 des interrupteurs I4A et I3C qui se trouvaient préalablement dans l'état de double couplage ne reçoivent plus que les codes A et C respectivement. Le moyen de communication 27 de l'interrupteur I4A commute alors vers le couplage by-pass au bout d'un temps prédéterminé, entraînant la fermeture des contacts 36 et 37 pour autoriser la commande du moyen de communication 27 de l'interrupteur I5A (anciennement I2B) par le poste source PSA, (figure 7). Le moyen de communication 27 de l'interrupteur I5A est dans l'état by-pass, car il ne reçoit que le code A. On remarque que la nouvelle zone ZA est alors agrandie de manière à couvrir I2B (qui devient I5A), tandis que la nouvelle zone ZB est réduite.

Après cette modification du dispositif de transmission 10, les manoeuvres de reconfiguration du réseau MT telles que représentées à la figure 7 peuvent intervenir par action sur l'organe de commande 43 des interrupteurs concernés (I5A et I4A).

En cas de disparition du défaut, le moyen de communication 27 de l'interrupteur I5A commute de l'état by-pass vers l'état double couplage dans un temps prédéterminé, avec réception du code B le plus prioritaire.Le dispositif de transmission 10 reprend alors la configuration de la figure 6.

Il est clair que le système de commutation 36,37,38,39 du modem 30 peut être réalisé avec des moyens équivalents.

Les modems des organes de couplage utilisent une modulation de phase à étalement spectral par séquence directe avec transposition sur une même fréquence porteuse à 25 kHz. La totalité de la bande 10-40 kHz est utilisée, et le choix de plusieurs codes d'étalement permet de définir plusieurs zones de communication ZA,ZB,ZC. Cette technique procure les avantages suivants:
- une seule fréquence porteuse,
- minimisation de l'énergie rayonnée,
- augmentation du rapport signal/bruit
- optimisation de la bande de fréquence.

**Revendications**

1. Dispositif de télétransmission (10) destiné à l'automatisation d'un réseau de distribution électrique (MT), notamment à moyenne tension, comprenant ,des moyens de communication à courants porteurs en ligne utilisant par couplage capacitif les lignes du réseau (MT) comme support de transmission pour l'échange d'informations et d'ordres entre un Système informatisé de téléconduite (SIT) et une pluralité d'organes d'interruption, notamment des interrupteurs télécommandés (I1A,I2A,I3A...I1B,I2B...I1C,I2C,I3C...), et des disjoncteurs (D) répartis le long d'une pluralité de tronçons élémentaires du réseau (MT) pour assurer une modification de structure du réseau (MT) affecté par un incident, au moyen d'opérations d'ouverture ou de fermeture des organes d'interruption concernés, le réseau (MT) étant interconnecté à des postes sources (PSA, PSB, PSC...) pilotés par le système informatisé de téléconduite (SIT) au moyen de liaisons spécifiques (LA,LB,LC...)
     caractérisé en ce que:
     - le dispositif de transmission (10) est découpé en régime d'exploitation normale en plusieurs sous-réseaux disjoints contenant chacun un poste source (PSA,PSB,PSC...), auquel est attribuée une zone de communication (ZA,ZB,ZC), dont les frontières sont formées par des interrupteurs d'artère I4A,I3C dans l'état ouvert;

- chaque poste source (PSA,PSB,PSC) comporte un moyen de communication pilote (14) ayant un circuit de modulation et de démodulation (19) maître destiné à recevoir et à émettre un signal codé (A,B,C) dans une zone de communication (ZA,ZB,ZC) prédéterminée;

- chaque interrupteur d'artère (I1A,I2B..,I1B, I2B.., I1C,I2C...) est équipé d'un moyen de communication auxiliaire (27) ayant un circuit de modulation et de démodulation (30) esclave destiné à émettre et à recevoir les signaux codés(A,B,C) avec un ordre de priorité, grâce à un premier récepteur (31) relié à un coupleur aval (28) connecté à l'une des bornes dudit interrupteur IA1..., un deuxième récepteur (32) branché à un coupleur amont (29) relié à la borne opposée du même interrupteur (I1A...), et un émetteur (56) branché à un circuit de couplage (45);

- ledit circuit de couplage (45) se trouve soit dans un premier état de shuntage ou by-pass lors de la fermeture de l'interrupteur (I1A...) associé, ou lors d'une réception d'un seul signal codé (A ou B ou C) par le premier ou deuxième récepteur (31,32), soit dans un deuxième état de double couplage, lors de l'ouverture de l'interrupteur (I1A...), et en cas de réception de deux ou plusieurs signaux codés, de manière à reconfigurer automatiquement les zones de communication (ZA,ZB, ZC) sur une artère (11) en défaut, permettant d'obtenir une communication optimum du dispositif de transmission (10) avant la modification de structure du réseau (MT).

2. Dispositif de télétransmission selon la revendication 1, caractérisé en ce que le circuit de couplage (45) de chaque moyen de communication auxiliaire (27) comporte un système de commutation branché à la sortie de chaque coupleur aval et amont (28,29), et comprenant un point milieu (35) relié à la sortie de l'émetteur (56), et que ledit système de commutation est piloté par un circuit électronique (34) du circuit de modulation et de démodulation (30) esclave.

3. Dispositif de télétransmission selon la revendication 2, caractérisé en ce que le système de commutation comporte deux contacts (36,37) branchés en série, et actionnés respectivement par un premier et un deuxième relais (38,39) alimentés à partir du circuit électronique (34).

4. Dispositif de télétransmission selon la revendication 2 ou 3, caractérisé en ce que les signaux de sortie des premier et deuxième récepteurs (31,32) du circuit de modulation et de démodulation (30) sont traités par le circuit électronique (34) associé à un sélecteur (65) de codes.

5. Dispositif de télétransmission selon la revendication 4, caractérisé en ce qu'un circuit sommateur (33) ou d'aiguillage est inséré entre le circuit électronique (34) et les sorties des deux récepteurs (31,32).

6. Dispositif de télétransmission selon l'une des revendications 2 à 5, caractérisé en ce qu'un détecteur de position (42) envoie au circuit électronique (34), un signal d'état ouvert ou fermé de l'interrupteur (I1A...), d'artère, et que le circuit électronique (34) est couplé à l'organe de commande (43) de l'interrupteur (I1A...) par une liaison électrique (44).

7. Dispositif de télétransmission selon la revendication 3, caractérisé en ce que les deux contacts (36,37) des relais (38,39) sont fermés dans le premier état de shuntage du circuit de couplage (45), alors que dans le deuxième état de double couplage, l'un desdits contacts est fermé et l'autre est ouvert, le contact fermé étant situé du côté du poste source émettant le signal codé le plus prioritaire, ou de niveau supérieur.

8. Dispositif de télétransmission selon l'une des revendications 1 à 7, caractérisé en ce que le système informatisé de téléconduite SIT coopère avec un organe de gestion G relié au moyen de communication pilote (14) de chaque poste source (PSA,PSB,PSC) par les liaisons (LA,LB,LC), pour assurer la gestion des priorités entre les applications, le routage des informations vers les moyens de communication pilote (14) des postes sources concernés, et la gestion des défaillances et des performances du réseau de transmission.

9. Dispositif de télétransmission selon l'une des revendications 1 à 8, caractérisé en ce que chaque moyen de communication utilise une modulation de phase à étalement spectral à séquence directe pour la transmission sur les lignes du réseau.

FIG. 1

EP 0 517 621 A1

_FIG.2_

_FIG.3_

_FIG.4_

FIG.5

FIG.6

EP 0 517 621 A1

FIG.7

Office européen
des brevets

# RAPPORT DE RECHERCHE EUROPEENNE

Numero de la demande

EP    92 42 0170

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 062 870 (WESTINGHOUSE ELECTRIC CORPORATION)<br>* page 1, ligne 1 - page 6, ligne 16; figures 1-4 * | 1-9 | H02J13/00 |
| A | EP-A-0 064 094 (SIEMENS AKTIENGESELLSCHAFT)<br>* page 1, ligne 8 - page 2, ligne 29; figures 1-4 * | 1-9 | |
| A | US-A-4 302 750 (WADHWANI ET AL.)<br>* colonne 2, ligne 34 - colonne 3, ligne 50; figures 1-7 * | 1-9 | |
| A | IEEE TRANSACTIONS ON POWER DELIVERY<br>vol. 5, no. 1, Janvier 1990, NEW YORK , US<br>ZHANG ET AL.: 'A Knowledge-based approach to optimize switching in substations'<br>* le document en entier * | 1-9 | |
| A | GB-A-2 176 972 (ROBINTON PRODUCTS INC.)<br>* page 1, ligne 37 - page 2, ligne 60; figures 1,2 * | 1-9 | DOMAINES TECHNIQUES RECHERCHES (Int. Cl.5)<br><br>H02J<br>H04B |

Le présent rapport a été établi pour toutes les revendications

| Lieu de la recherche | Date d'achèvement de la recherche | Examinateur |
|---|---|---|
| LA HAYE | 31 AOUT 1992 | SCHOBERT D.A.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 01.82 (P0462)